# EUROPEAN PATENT APPLICATION

(11) **EP 1 167 240 A1**
(43) Date of publication of application: **02.01.2002**
(21) Application number: 01304924.2
(22) Date of filing: 05.06.2001
(51) Int. Cl.: B65F 1/06, B65F 1/12

(54) **Container for storing recyclable waste**

(30) Priority: 17.06.2000 GB 0014915
(71) Applicant: Solway Recycling Limited, Dumfries DG2 9SH (GB)
(72) Inventor: Hiddleston, Roy, Dumfries DG2 9SH, Scotland (GB)
(74) Representative: McKechnie, Neil

(57) **Abstract**

The present invention relates to a container (1) for storing recyclable waste, such as paper, plastic, metals or glass, with particular reference to a storage of farm waste, such as plastic bail wrappings. The container (1) takes the form of a separable outer container with an inner lining (2) so that when the inner lining (2) is full, it can be easily accessed and securely stored.

## Description

The present invention relates to a novel method of, and apparatus for, containment for recyclable waste.

The recycling of materials, such as paper, plastic, metals and glass is a practice which is increasing in many areas. The increase in recycling has been facilitated by improved public awareness and improved accessibility to recycling schemes. Many recycling schemes use containers that are distributed throughout urban and rural areas.

Rural areas, particularly farms, produce large amounts of waste which could be recycled. In particular, plastic bale wrappings that are used on farms are appropriate for recycling, but the logistics involved in storing them until a collection can be organised mean that they generally are not recycled.

The containers that are currently used in recycling schemes take many forms. The containers are usually characterised by presenting in their upper part one or more openings for the entry of recyclable material, and a bottom discharge door for the unloading of the contents. The principal disadvantage of the current recycling containers is that once full, a collection vehicle must be sent to empty the contents. It can also be seen that removal of the contents from the container is a difficult operation.

It would therefore be a considerable advantage to provide a recycling container that allows material to be compacted and wrapped for effective storage, allowing the container to be emptied and the recyclable material kept safely, ready for collection. It would also be an advantage to provide a recycling container that has easy access to allow the contents to be removed swiftly and cleanly. It would be particularly advantageous if the recycling container was suited for use on farms.

It is a first aim of the present invention to provide a container for the collection of recyclable material.

It is an additional aim to provide a recycling container that is well suited for use on farms.

It is a further aim of the present invention to provide a recycling container that allows the contents to be removed and stored ready for collection.

An additional aim is to provide a recycling container which offers easy access to its contents when full.

A still further aim is to provide on a recycling container means that will allow it to be transported easily.

According to the present invention, there is provided a recycling container, comprising an external container and a removable inner lining for storing waste, wherein the external container is provided in sections which can be separated without disturbing the inner lining.

Preferably means are provided to facilitate transportation of the recycling container.

Optionally, the transportation means are external attachment means which facilitate transport by an external source, such as a tractor or loader.

A further option is that the transportation means are ground engaging wheel means.

Preferably the container is made of a strong durable material, which may be plastic, metal or a metal alloy.

Preferably the container takes the form of a cylindrical tube. Alternatively, the container may be made in other shapes.

Preferably the container is formed in two sections which are connected together with closing means at one side and hinging means at the other.

Preferably the removable lining means takes the form of a plastics material.

Optionally, the base of the lining means may be reinforced.

A further option is that the open end of the lining means may be provided with means to allow it to be closed securely when full.

Preferably the recycling container is provided with a lid. Most preferably the lid is made of a weather-proof material.

Preferably the lid takes the form of a canopy.
Attachment means may be provided on the canopy to allow the canopy to be attached to holding means that may be provided on the container.

Optionally, the lid may be attached to the container using a hinge, and if required a locking mechanism may also be added.

Optionally, a stabilising bar may be provided at the upper open end of the container, in order to provide support for the canopy.

Optionally, external attachment means are provided to allow transportation by a tractor or loader, these attachments may take the form of hooks to which chains can be attached to facilitate lifting of the container.

A further option is that channels may be provided towards the base of the container to allow lifting of the container, for example by a fork lift.

Preferably the recycling containers and the removable linings will be provided with identification labels designating the owner or area to which they belong.

Example embodiments of the invention will now be described, in order to provide a better understanding of the invention and with reference to the accompanying Figures in which:
Figure 1 is a top view of the recycling container, including the inner removable lining; and
Figure 2 is a side view of the recycling container in the open position; and
Figure 3 is a side view of the recycling container in the closed position.

In the following example the recycling container is used as a recycling bin on farms, for the storage of plastic bale wrapping. The recycling container, which takes the form of a cylindrical tube halved longitudinally, is assembled as follows:

The two halves of the recycling bin 1 are joined together at one side by hinges 3. On the opposite side to the hinges 3, there are provided latches 4 which will allow the recycling bin 1 to be locked into the closed position when required. A plastic lining bag 2 is then placed within the recycling bin 1 to lie flush with the inside surface. A supporting bar 5 is then laid across the open upper end of the recycling bin 1, to provide support for a canopy lid. The canopy lid may be secured in place over the upper open end of the recycling container by securing it to holding hooks 6 provided on the external surface of the recycling bin 1.

The recycling bin 1 may then be used for the containment of waste plastic bale wrapping ready for recycling. Waste plastic bale wrapping may be compacted into the recycling bin 1, until the lining bag 2 is full. Once full, the lining bag 2 is securely closed, either with securing means that are provided or using plastic twine or cable. If required, an identifying label may be attached securely to the outside of the lining bag 2.

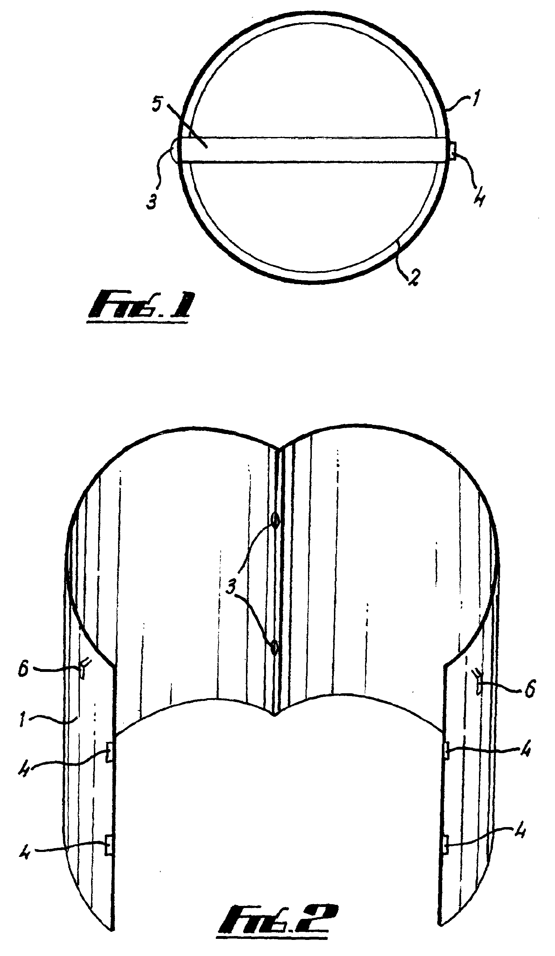

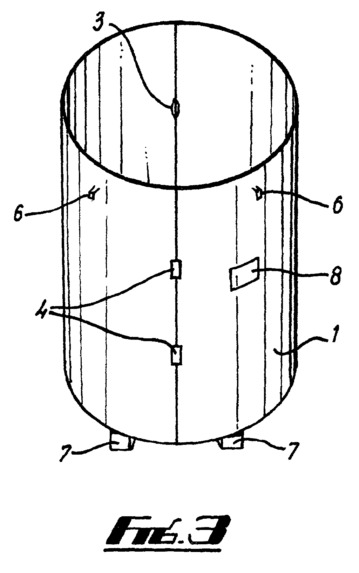

In order to remove the plastic lining bag 2 from the recycling container 1, the latches 4 are unlocked, and the recycling bin 1 is moved into its open position, as seen in Figure 2. The full lining bag 2 may then be removed from the recycling container 1 either manually or by using mechanical means. The full lining bag 2 may then be stored safely until a collection is organised. The recycling bin 1 is then put back into its closed position and secured using the latches 4 and a new plastic lining bag 2 is provided inside the recycling bin 1 to allow for continued use.

If appropriate, the full lining bags 2 may be wrapped further, for example using a bale wrapper, this keeps the material tidy and allows it to be stored for longer periods of time. This is particularly useful in outlying rural areas.

In an alternative embodiment, as shown in Figure 3, the recycling container 1 may be provided with means to facilitate transportation 8 and 7. The transportation means may take the form of attachment means 8 provided on the external surface of the recycling container 1, which provide for transportation by tractor, loader or crane. Alternatively, the means for facilitating transportation may take the form of channels 7 provided at the base of the recycling container 1, to allow for transportation using, for example, a fork lift truck.

The detailed embodiment disclosed above is merely exemplary of the invention, which may be embodied in various forms. Therefore, specific structural and functional details disclosed herein are not to be interpreted as limiting, but merely as a basis for the Claims and for teaching one skilled in the art as to the various uses of the present invention in virtually any appropriately designed structure.

## Claims

1. A recycling container, comprising an external container and a removable inner lining for storing waste, wherein the external container is provided in sections which can be separated without disturbing the inner lining.

2. A recycling container as in Claim 1, which has external attachment means which facilitate transporation by an external source.

3. A recycling container as in Claim 1 or 2, which has ground engaging wheel means.

4. A recycling container as in any of the previous Claims, wherein the external container comprises two sections, connected together with a closing means at one side and a hinging means at the other side.

5. A recycling container as in any of the previous Claims, where the base of the lining means is reinforced.

6. A recycling container as in any of the previous Claims, wherein the open end of the lining means is provided with means to allow it to be closed securely when full.

7. A recycling container as described in any of the previous Claims, wherein the recycling container is provided with a lid.

8. A recycling container as in Claim 7, wherein a stabilising bar is provided at the upper end of the container in order to provide a support for the lid.

9. A recycling container as described in any of the previous Claims, wherein channels are provided towards the base of the container to allow lifting of the container.

10. A recycling container as described in any of the previous Claims, where the removable lining is provided with identification labels.
